# EUROPEAN PATENT SPECIFICATION

(11) **EP 1 661 799 B1**
(45) Date of publication and mention of the grant of the patent: **14.05.2008**
(21) Application number: 05025561.1
(22) Date of filing: 23.11.2005
(51) Int. Cl.: B62J 9/00

(54) **Trunk and trunk device for motorcycle**
Kofferraum für ein Motorrad
Compartiment de rangement pour motocyclette

(30) Priority: 30.11.2004 JP 2004346973; 30.11.2004 JP 2004346974
(43) Date of publication of application: 31.05.2006
(73) Proprietor: Honda Access Corporation, Niizi-shi Saitama (JP)
(72) Inventor: Kawai, Kenji, Niiza-shi Saitama (JP); Ikezaki, Masahiko, Niiza-shi Saitama (JP); Ono, Naoto, Niiza-shi Saitama (JP); Ito, Tetsuya, Niiza-shi Saitama (JP)
(74) Representative: Rupp, Christian

(56) References cited:
- EP-A- 1 063 157
- EP-A- 1 338 498
- WO-A-02/34613

## Description

### BACKGROUND OF THE INVENTION

### FIELD OF THE INVENTION

The present invention relates to improvement in a trunk for amotorcycle, comprising a trunk body detachably mounted to a carrier of the motorcycle, and a trunk lid connected to the trunk body through a hinge to open and close an upper open surface of the trunk body, the trunk body and the trunk lid being formed with a lower handle half and an upper handle half which are superposed on each other to constitute a carrying handle, as well as improvement in a trunk device for a motorcycle in which the trunk is mounted to the carrier of the motorcycle.

### DESCRIPTION OF THE RELATED ART

There is a trunk for a motor cycle conventionally known from, for example, Japanese PatentApplication Laid-open No.2002-274464, which comprises a trunk body detachably mounted to a carrier of the motorcycle, and a trunk lid connected to the trunk body through a hinge to open and close an upper open surface of the trunk body, a carrying handle attached to the trunk body or the trunk lid. Also, there is a known trunk device, see closest prior art EP 1338498, in which a trunk body and a trunk lid are formed with a lower handle half and an upper handle half which are superposed on each other to constitute a carrying handle.

Either of the conventional trunks has a drawback that, when the trunk is mounted on the motorcycle, the entire carrying handle is exposed to deteriorate the appearance of the trunk.

### SUMMARY OF THE INVENTION

The present invention has been accomplished with such circumstance in view, and it is a first object of the present invention to provide a trunk for a motorcycle, wherein an opening inside a carrying handle is not visible apparently in a state in which the trunk is mounted on the motorcycle.

It is a second object to provide a trunk device for a motorcycle, in which the trunk can be mounted to a carrier by a simple structure.

In order to achieve the first object, according to a first feature of the present invention, there is provided a trunk for amotorcycle, comprising a trunk body detachably mounted to a carrier of the motorcycle, and a trunk lid connected to the trunk body through a hinge to open and close an upper open surface of the trunk body, the trunk body and the trunk lid being formed with a lower handle half and an upper handle half which are superposed on each other to constitute a carrying handle, characterized in that a decorative cover for covering and concealing an opening inside the handle from above is mounted to the trunk lid, and a partition wall is integrally formed on the upper handle half to extend from the upper handle half along an inner surface of the decorative cover.

With the first feature of the present invention, the opening inside the carrying handle is covered and concealed from above by the decorative cover to open only downwards. Therefore, in a state in which the trunk is mounted to the carrier, the opening is not visible apparently, leading to a remarkably excellent appearance of the trunk.

On the other hand, when a user inserts fingers into the opening to grasp the handle in order to remove the trunk from the carrier and carry the trunk, a partition wall rising from the upper handle half obstructs the pushing contact of the fingers with the decorative cover, thereby preventing the deformation and disengagement of the decorative cover.

Moreover, a free shape such as a ducktail-shape that is difficult to form in the trunk lid itself can be easily imparted to a rear end of the decorative cover. Therefore, it is possible to provide a trunk for motorcycle, which is good in formability and low in cost and which has a shape of a novel design by virtue of the mounting of such a decorative cover.

According to a second feature of the present invention, in addition to the first feature, the decorative cover and the upper handle half are provided with a positioning piece and a positioning bore, respectively, which are brought into engagement with each other upon mounting of the decorative cover to the trunk lid.

With the second feature of the present invention, it is possible to simplify the structure of mounting the decorative cover, and moreover to cause the partition wall to prevent the positioning piece from being disengaged from the positioning hole due to pushing by the user's fingers grasping the handle. Namely, the partition wall contributes to the simplification of the structure of mounting the decorative cover.
In order to achieve the second object, according to the features of claim 3, there is provided a trunk device for a motorcycle in which a trunk according to the first or second feature is mounted to a carrier for the motorcycle, characterized in that a locking unit is constructed by mounting, to a common unit base secured to the trunk body, a first locking means for maintaining secured states of the trunk body and the carrier through the unit base, and a second locking means for maintaining closed states of the trunk body and the trunk lid through the unit base; and the locking unit is provided with a common lock means capable of locking the first locking means and the second locking means in their locking states.

With the third feature of the present invention, the first locking means, the second locking means and the lock means are incorporated into the common unit base to constitute a single locking unit. Therefore, one unit base and one lock means are merely needed, thereby simplifying the structure and reducing the number of parts. Further, the single unit base is merely secured to the trunk body when assembling the locking unit to the trunk body, leading to a reduced number of assembling steps, which contributes to a reduction in cost. Furthermore, the locking unit is easily applicable to various kinds of trunk having different specifications, so that the locking unit has an excellent general-purpose property.

According to a fourth feature of the present invention, in addition to the third feature, the first locking means includes a first locking lever which is operated between a locking position for securing the unit base and the carrier to each other and an unlocking position for canceling such securing; and the second locking means includes a second locking lever which is operated between a locking position for securing the unit base and the trunk lid to each other and an unlocking position for canceling such securing; and one of the first and second locking levers is provided with a lock means for retaining the other locking lever in its locking position.

With the fourth feature of the present invention, because one of the first and second locking levers is provided with the lock means for retaining the other locking lever at its locking position, the one locking lever provided with the lock means is also inevitably retained at its locking position by the other locking lever. Therefore, a mating engagement portion, with which the lock means is engaged upon the locking of the lock means, is merely provided on the other locking lever, thereby further simplifying the structure.

According to a fifth feature of the present invention, in addition to the fourth feature, the first locking means comprises a hook member supported on the unit base and moved between lifted and lowered positions in which the hook member is in and out of engagement with a locking portion of the carrier, the first locking lever supported in the unit base and turned between the locking position and the unlocking position, and a toggle link which connects the first locking lever and the hook member to each other and which lifts and lowers the hook member with the turning of the locking lever to the locking position and the unlocking position; the second locking means comprises a link turnably supported at one end on the unit base, and a second locking lever turnably connected to the other end of the link and turned together with the link between a lower locking position in which the second locking lever is in engagement with a locked hook of the trunk lid and an upper unlocking position in which the second locking lever is out of engagement with the locked hook; the locking lever is formed to cover the unit base in its locking position and provided with a notch for receiving the first locking lever; a cylinder lock constituting the lock means is mounted to the second locking lever sideways of the notch; and the cylinder lock is provided with a locking piece which is brought into engagement with the first locking lever to prevent the turning of the first locking lever toward the unlocking position upon the locking operation of the cylinder lock.

With the fifth feature of the present invention, the arrangement of the first and second locking levers adjacent each other ensures that the locking unit is formed compactly, and the second locking lever serves as a cover covering the unit base. Thus, the locking unit having a simple structure and a good appearance can be constructed.

The first locking means corresponds to a hook member 46, a first locking lever 50 and a toggle link 53 in an embodiment of the present invention which will be described hereinafter; the second locking means correspond to a second locking lever 59 and a link 60 in the embodiment; and the lock means corresponds to a cylinder lock 66 in the embodiment.

The above and other objects, features and advantages of the invention will become apparent from the following detailed description of the preferred embodiment taken in conjunction with the accompanying drawings.

### BRIEF DRSCRIPTION OF THE DRAWINGS

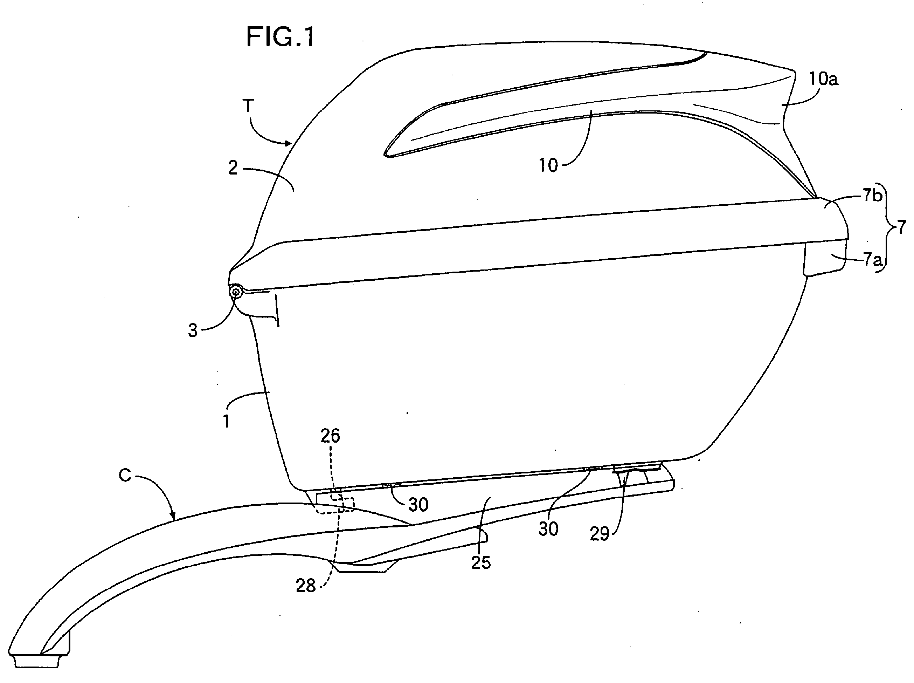

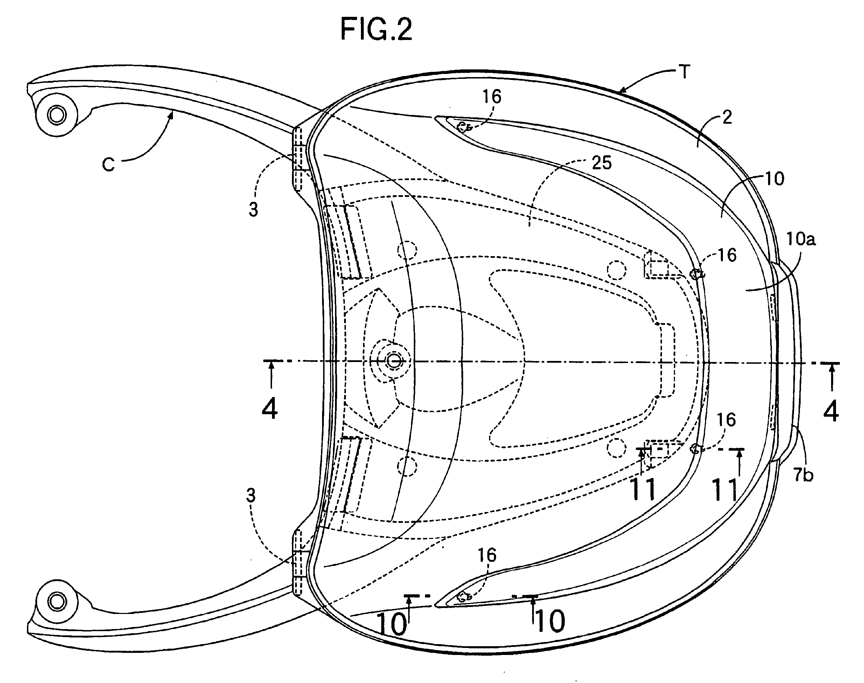

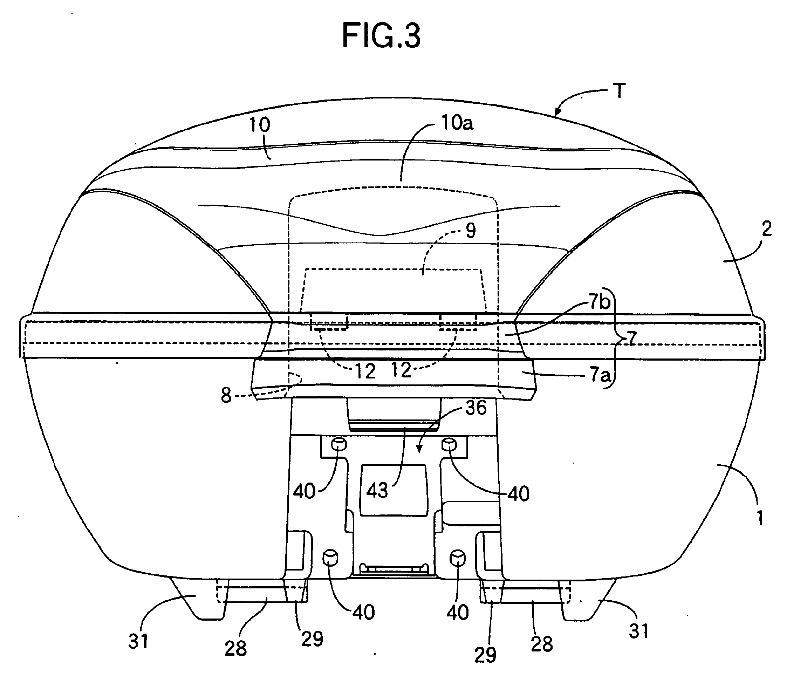

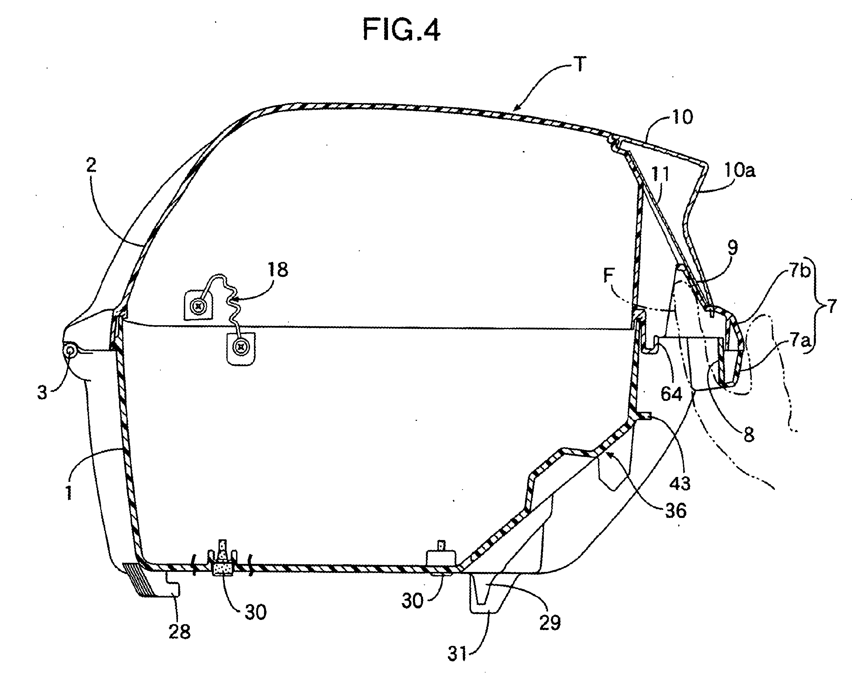

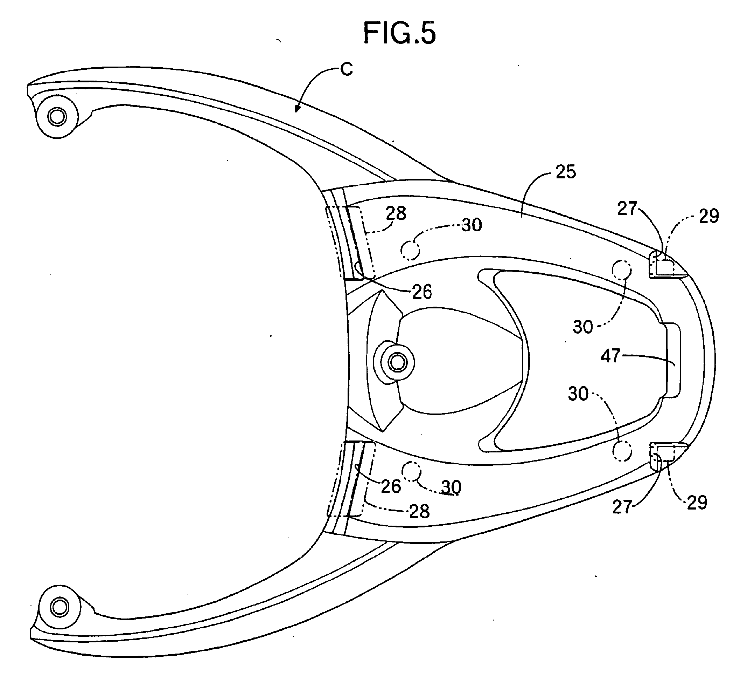

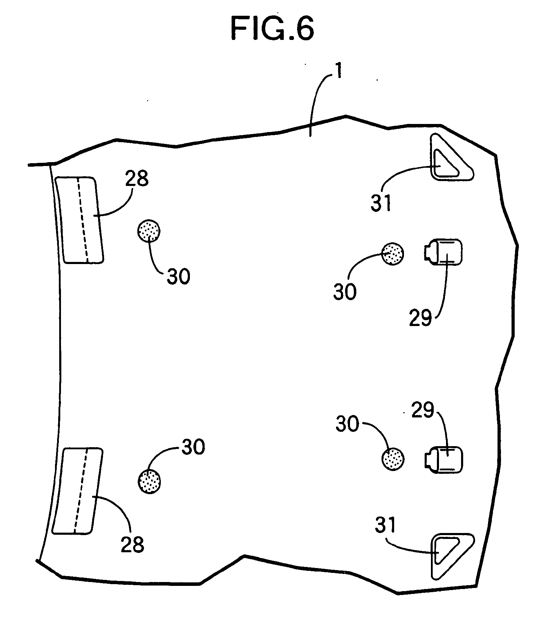

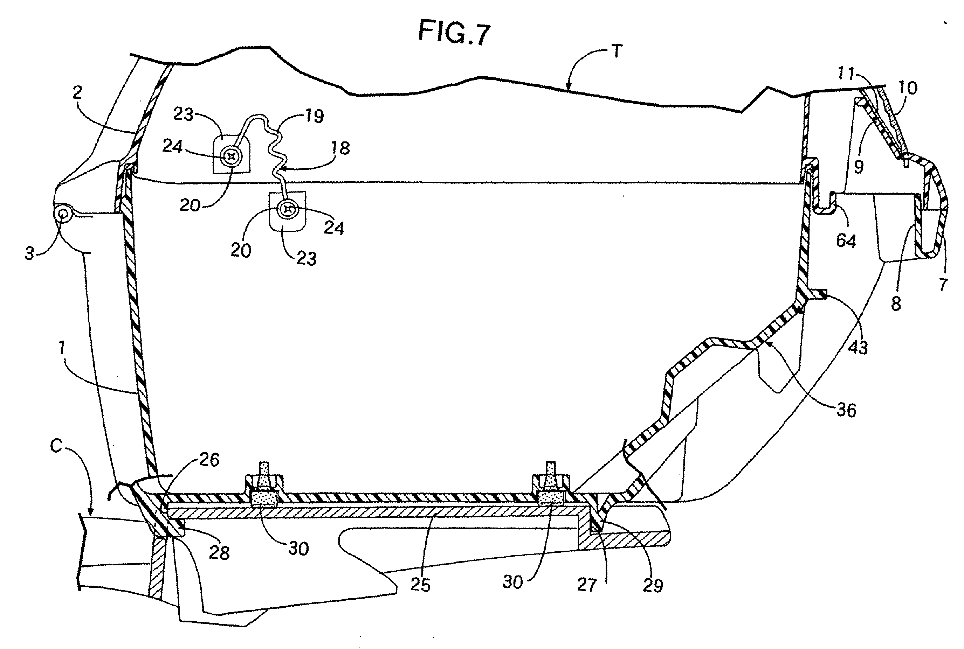

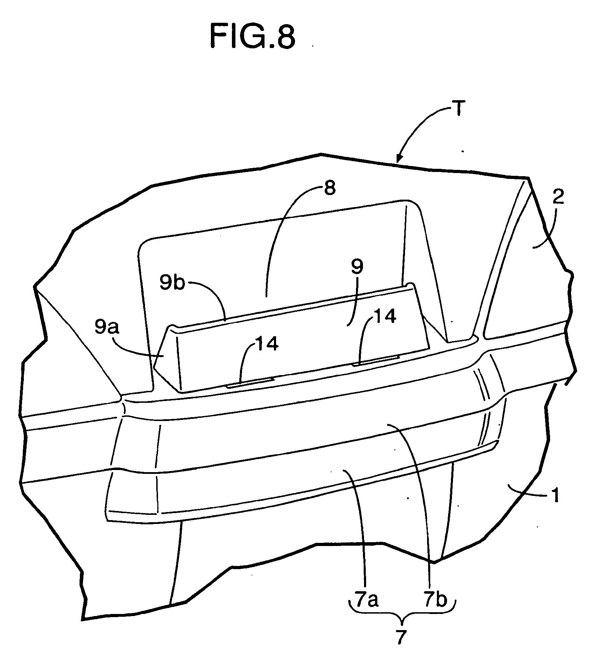

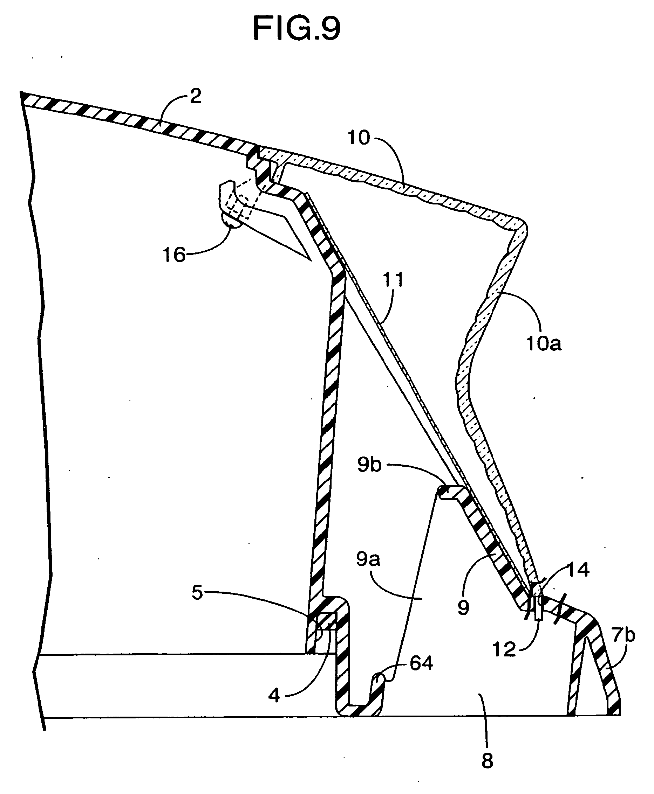

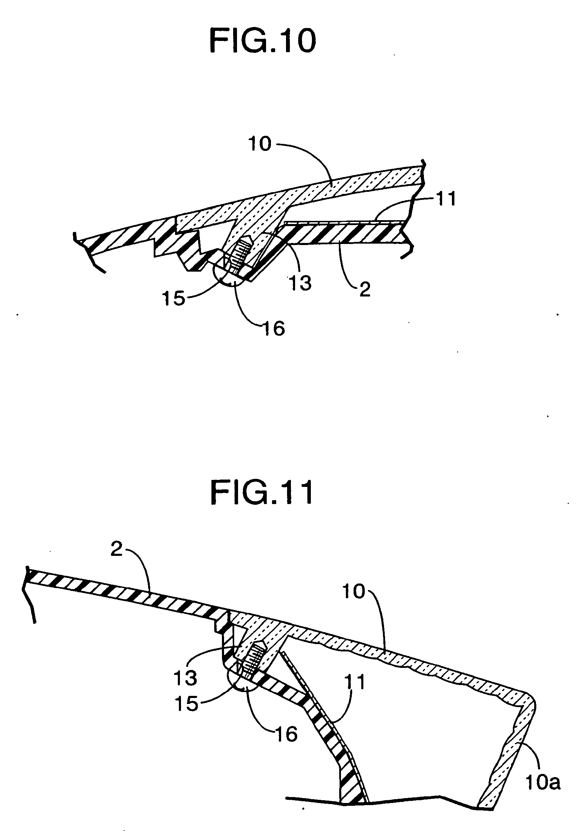

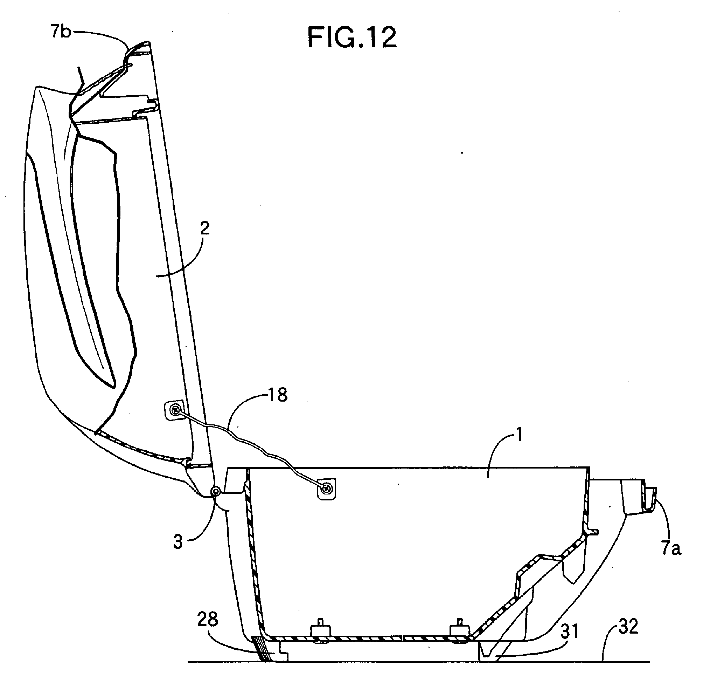

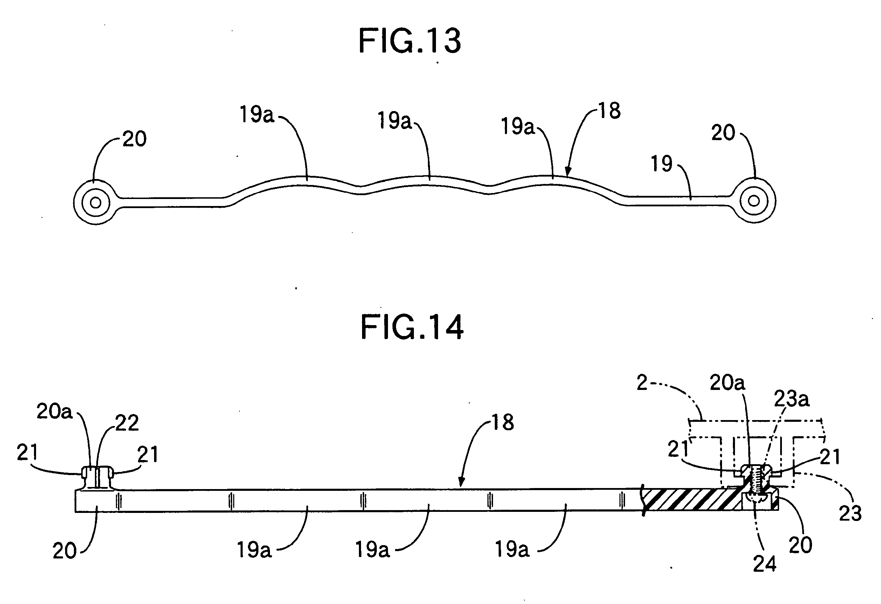

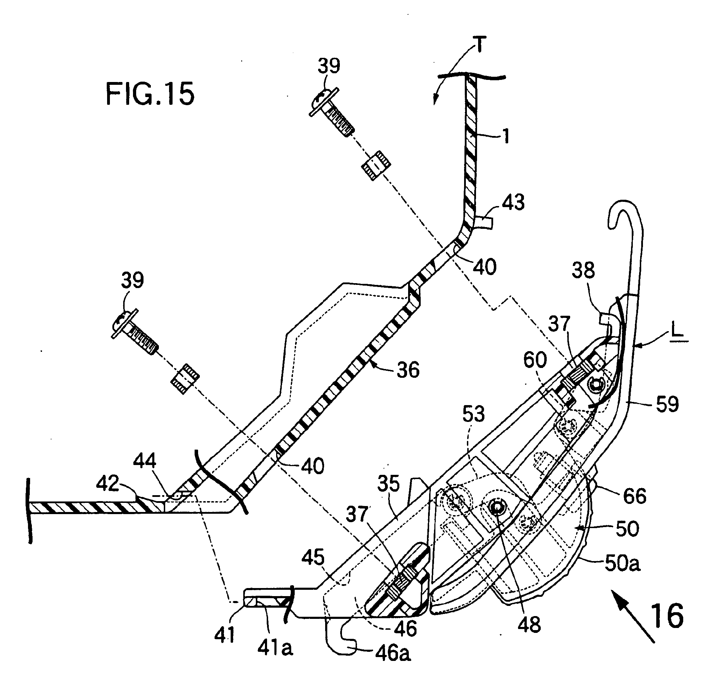

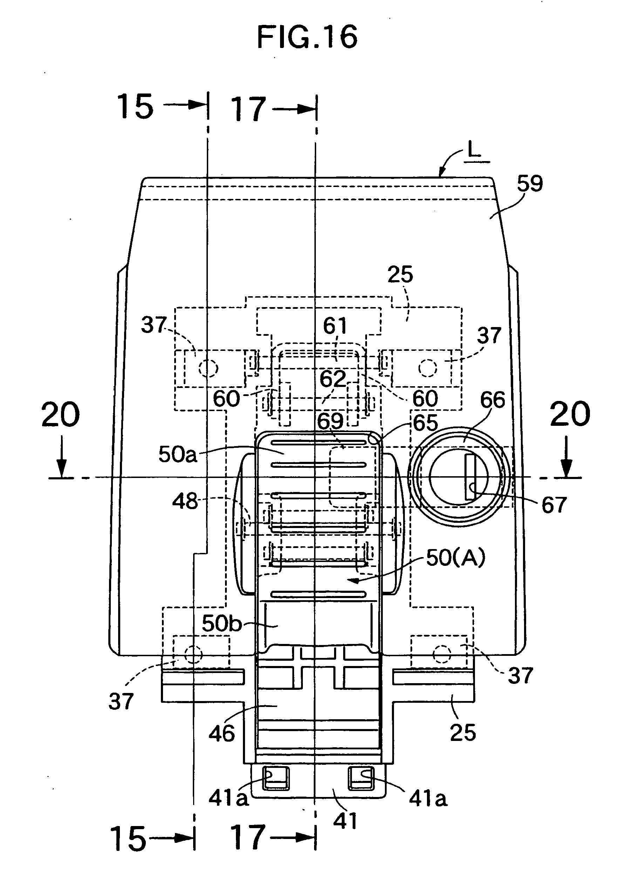

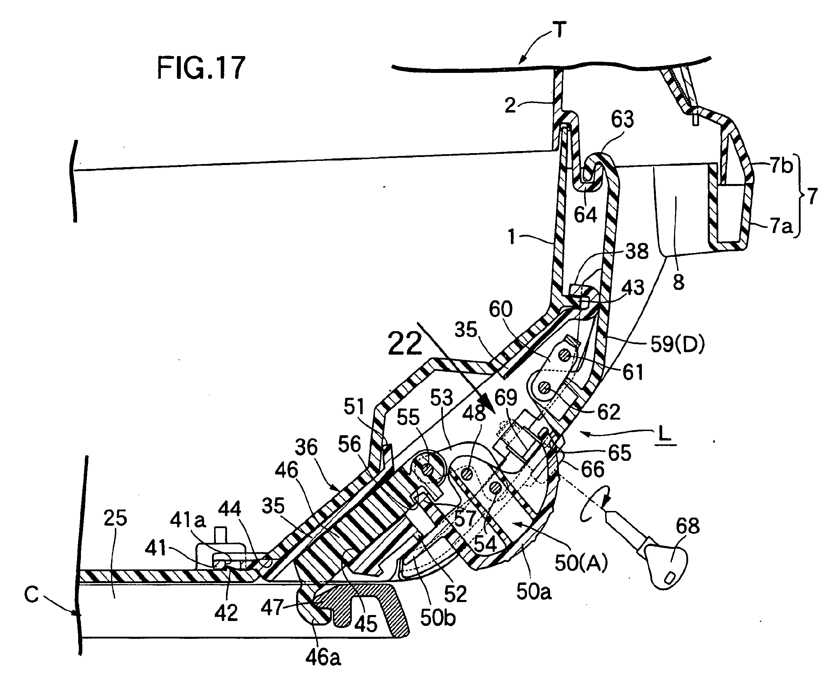

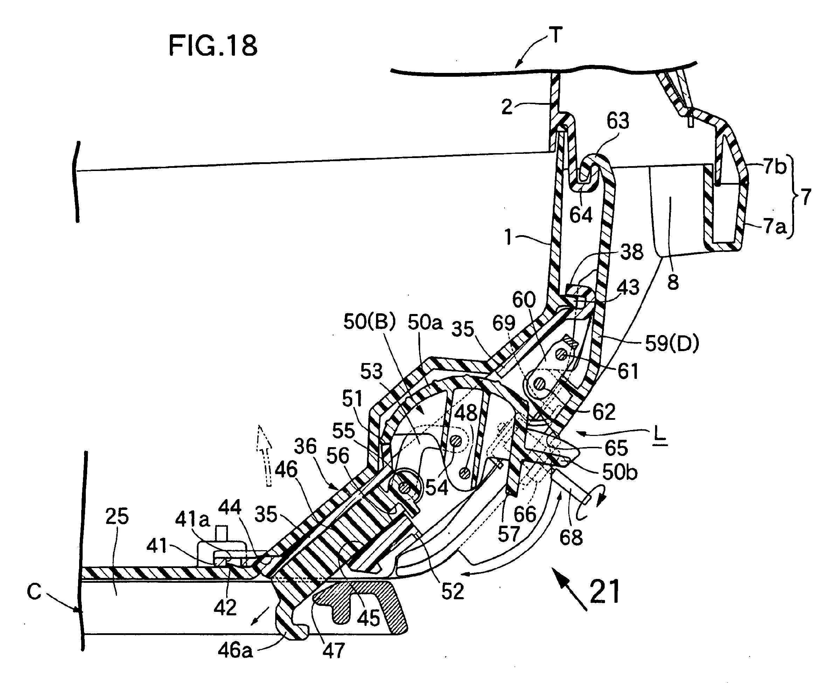

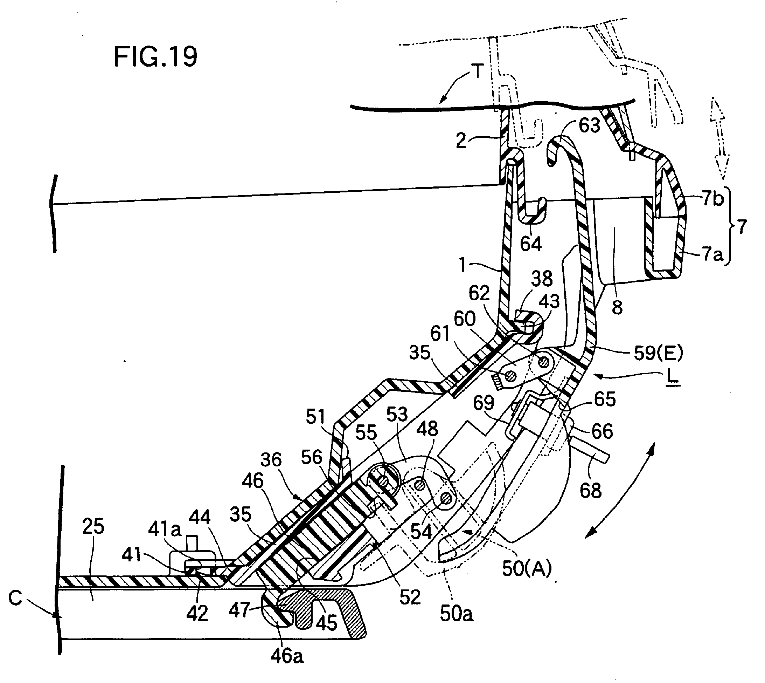

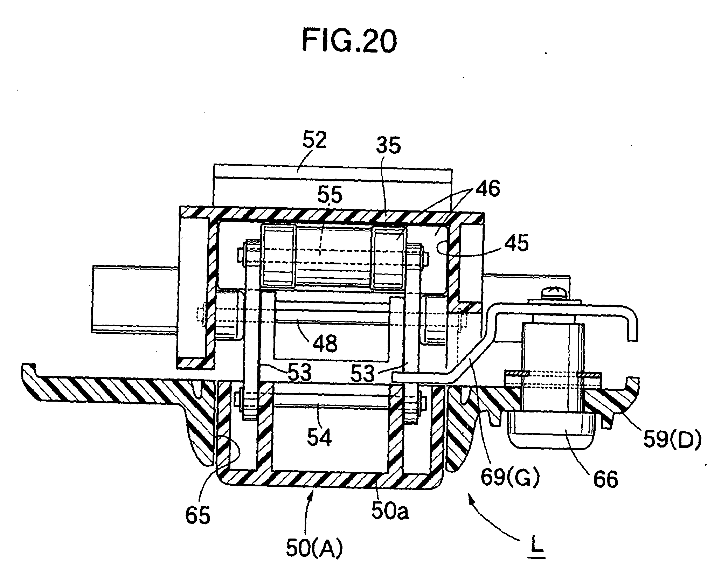

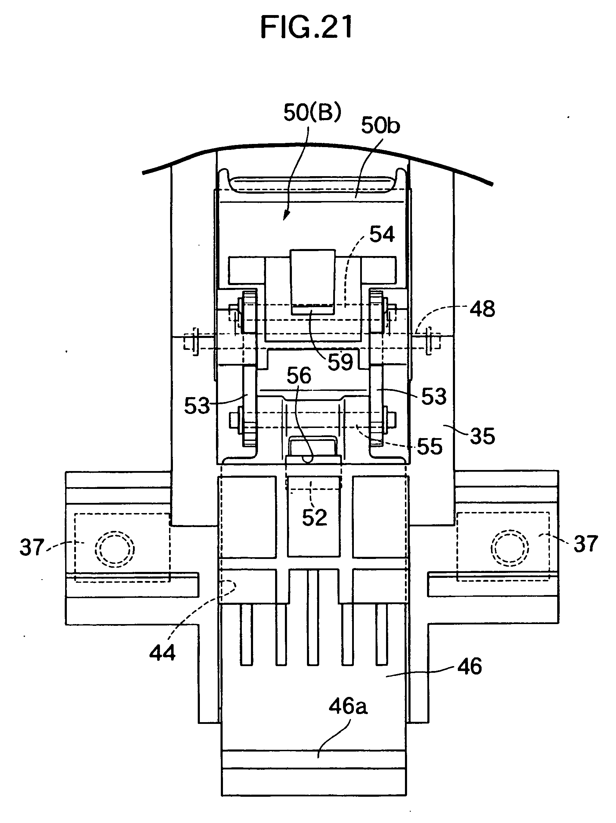

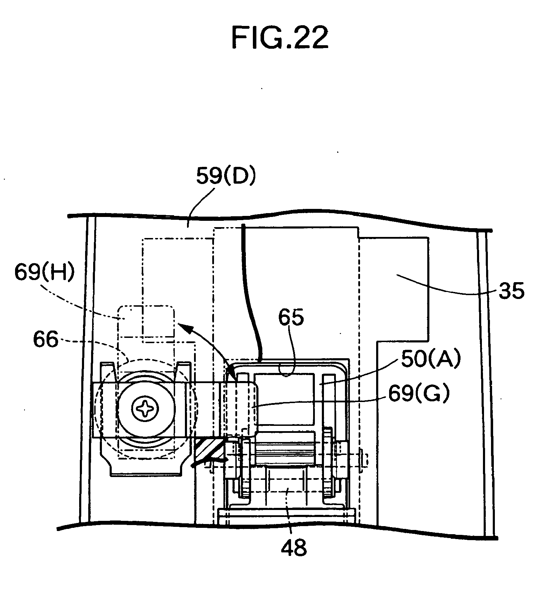

Fig.1 is a side view showing a trurik according to an embodiment of the present invention in a state in which it is mounted to a carrier of a motorcycle; Fig.2 is a plan view corresponding to Fig.1; Fig. 3 is a rear view of the trunk (with a locking unit removed) ; Fig.4 is a sectional view taken along a line 4-4 in Fig.2; Fig.5 is a plan view of the carrier in Fig.1; Fig.6 is a bottom view of a portion of the trunk; Fig. 7 is an enlarged vertical sectional view of essential portions of Fig.1; Fig.8 is a perspective view of portions around a carrying handle of the trunk; Fig.9 is an enlarged view of essential portions of Fig.4; Fig.10 is an enlarged sectional view taken along a line 10-10 in Fig.2; Fig.11 is an enlarged sectional view taken along a line 11-11 in Fig.2; Fig.12 is a partially cutaway side view showing a opened state of the trunk; Fig.13 is a side view showing a full-opening restriction strap in Fig. 12 in a free state; Fig. 14 is a plan view corresponding to Fig.13; Fig.15 is a sectional view taken along a line 15-15 in Fig.16, showing the trunk and the locking unit in separated states; Fig.16 is a view taken in a direction of an arrow 16 in Fig.15; Fig.17 is a sectional view taken along a line 17-17 in Fig. 16 (showing locking states of first and second locking levers); Fig.18 is a view for explaining the operation, corresponding to Fig.17 (showing an unlocking state of the first locking lever); Fig. 19 is a view for explaining the other operation, corresponding to Fig. 17 (showing an unlocking state of the second locking lever) ; Fig.20 is a sectional view taken along a line 20-20 in Fig.16; Fig.21 is a view taken in a direction of an arrow 21 in Fig.18; and Fig. 22 is a view taken in a direction of an arrow 22 in Fig.17.

### DESCRIPTION OF PREFERRED EMBODIMENT

The present invention will now be described by way of a preferred embodiment with reference to the accompanying drawings.

Referring first to Figs.1 to 4, a trunk T is detachably mounted to a carrier C mounted to a rear portion of a vehicle body of a motorcycle so that the trunk T can also serve as a seat back of a rider's seat (not shown). The trunk T comprises a trunk body 1 with its upper surface opened, and a trunk lid 2 turnably connected to a front end of the trunk body 1 through a hinge 3 to open and close the opened upper surface of the trunk body 1. The trunk body 1 is detachably mounted to the carrier C. Each of the trunk body 1 and the trunk lid 2 is made of a synthetic resin, and has a simple box-shape with one surface opened which can be molded by a vertically split mold.

As clearly shown in Fig.9, an endless seal groove 5 with a seal member 4 fitted therein is formed in a peripheral edge along a lower end of the trunk lid 2, so that a peripheral edge at an upper end of the trunk body 1 is fitted into the seal groove 5 upon closing of the trunk lid 2.

The structure of a handle 7 used for carrying the trunk T and portions around the handle 7 will be described below with reference to Figs.2, 3 and 7 to 11.

Referring to Figs. 7 to 9, a lower handle half 7a and an upper handle half 7b are integrally formed at rear ends of the trunk body 1 and the trunk lid 2, respectively, and are superposed on each other upon closing of the trunk lid 2 to constitute the carrying handle 7. Provided inside the handle 7 is an opening 8 for receiving the user' s fingers grasping the handle 7. The upper handle half 7b is integrally formed with a partition wall 9 which is inclined from an inner edge along an upper end of the upper handle half 7b toward the opening 8 to protrude upwards. Reinforcing ribs 9a and 9b bent forwards are integrally connected to laterally opposite ends and an upper end of the partition wall 9. In this arrangement, a front end face of the reinforcing rib 9a is inclined upwards to be away from a rear wall of the trunk lid 2 opposed to the front end face so as not to obstruct the molding of the trunk lid 2 by the vertically split mold.

A decorative cover 10 for covering the opening 8 from above to conceal the opening 8 is mounted to the trunk lid 2. The decorative cover 10 has a substantially U-shape as viewed in a plane so that its laterally opposite ends extend forwards along laterally opposite sides of the trunk lid 2 while covering the opening 8 from above to conceal the opening 8 (see Fig.2). The decorative cover 10 has a rear end portion 10a formed into a ducktail shape. The decorative cover 10 is made of a translucent synthetic resin colored, for example, red. In order to make the tint conspicuous, a silver reflecting film 11 is disposed inside the decorative cover 10. An irregularity is formed on an inner surface of the decorative cover 10 to produce horizontal stripes.

As clearly shown in Figs.3, 9, 10 and 11, a pair of left and right positioning pieces 12, 12 are integrally formed at a lower end of the ducktail-shaped rear end portion 10a of the decorative cover 10. A plurality of mounting bosses 13 are integrally formed on an inner surface of the decorative cover 10 along its U-shaped inner peripheral edge. On the other hand, a plurality of screw bores 15 are provided in the trunk lid 2 to correspond to the mounting boss 13. To attach the decorative cover 10 to the trunk lid 2, the reflecting film 11 is first disposed so as to overlap an outer surface of the partition wall 9 and cover the opening 8 inside the handle 7 from above, and is affixed to the trunk lid 2. Then, the decorative cover 10 is disposed to overlap the reflecting film 11, while inserting the positioning pieces 12, 12 into positioning bores 14, 14 provided in the upper handle half 7b, and screws 16 inserted into the screw bores 15 from the inside of the trunk lid 2 are threadedly fitted into the mounting bosses 13 of the decorative cover 10 and tightened.

Thus, the opening 8 inside the handle 7 is covered from above and concealed by the decorative cover 10 and the reflecting film 11 to open only downwards. Therefore, in a state in which the trunk T is secured to the carrier C, the opening is not visible apparently, and even the presence of the handle 7 cannot be visually recognized, leading to a remarkably excellent appearance of the trunk T.

On the other hand, to detach the trunk T from carrier C and carry the trunk T, the user inserts his fingers F into the opening 8 from below to grasp the handle 7 as shown in Fig. 4. At this time, the partition wall 9 rising from the upper handle half 7b obstructs the pushing contact of the fingers F with the reflecting film 11 and the decorative cover 10, thereby preventing the deformation of the reflecting film 11 and the decorative cover 10 as well as the disengagement of the positioning pieces 12, 12 from the positioning bores 14, 14 which would otherwise be caused by the fingers F. Namely, the presence of the partition wall 9 enables such a remarkably simple mounting structure of the decorative cover 10 wherein the positioning pieces 12, 12 of the decorative cover 10 are merely engaged in the positioning bores 14, 14 in the upper handle half 7b.

In addition, the decorative cover 10 is molded from a synthetic resin different from that of the trunk lid 2, and hence the ducktail-shaped rear end portion 10a, which cannot be given to the trunk lid 2 molded by the split mold, can be formed on the decorative cover 10. Therefore, it is possible to provide a trunk T for a motorcycle which is good in formability and low in cost and which has a shape of a novel design by virtue of the mounting of such a decorative cover 10.

As shown in Figs. 7 and 12 to 14, the full-opening restriction straps 18, 18 for restricting the fully-opened position of the trunk lid 2 are connected to laterally opposite inner sidewalls of the trunk body 1 and the trunk lid 2. Each of the full-opening restriction straps 18, 18 is made of a synthetic resin, and comprises a band portion 19 and a pair of connecting bosses 20, 20 integrally formed at opposite ends of the band portion 19. The band portion 19 has a rectangular section having longer sides extending in an axial direction of the connecting boss 20, 20. A plurality of arcuate portions 19a are uniformly formed in the intermediate portion of the band portion 19 along its one of the longer sides.

Each of the pair of connecting bosses 20, 20 has a connecting tube 20a protruding from one end face thereof. A pair of locking projections 21, 21 protruding in opposite directions are formed on an outer periphery of a front end of the connecting tube 20a. A slot 22 is provided in the connecting tube 20a to extend between the locking projections 21, 21.

A mounting wall 23 having an angular U-shape in section for connection of the connecting boss 20 is integrally formed on an inner wall of each of the trunk body 1 and the trunk lid 2, and is provided with a connecting hole 23a, into which the connecting tube 20a is rotatably fitted.

The full-opening restriction strap 18 is disposed with the convex surfaces of the plurality of arcuate portions 19a facing a direction opposite from the hinge 3, when the connecting bosses 20 are mounted on the corresponding mounting walls 23. Then, the connecting tube 20a of the connecting boss 20 is pushed into the connecting hole 23a in the mounting wall 23, so that the locking projections 21, 21 are passed through the connecting hole 23a, and thereafter, a tapping screw 24 is screwed into a hollow portion of the connecting tube 20a, thereby spreading a distance between the pair of locking projections 21, 21 to prevent the disengagement of the connecting tube 20a from the connecting hole 23a.

In this manner, the full-opening restriction strap 18 connected to the trunk body 1 and the trunk lid 2 is brought into a stretched state upon opening of the trunk lid 2 to restrict the fully-opened position of the trunk lid 2. When the full opening is restricted, an opening shock can be absorbed or moderated by the elastic stretching of the plurality of arcuate portions 19a. Moreover, because the arcuate portions 19a of the full-opening restriction strap 18 face the direction opposite from the hinge 3 in the fully opened state of the trunk lid 2, when the trunk lid 2 is closed, the full-opening restriction strap 18 is bent inwards of the trunk T in accordance with a direction of curving of the arcuate portions 19a, so that the full-opening restriction strap 18 cannot be sandwiched between the trunk body 1 and the trunk lid 2.

The structure of mounting the trunk T to the carrier C and the structure of engaging the trunk lid 2 with the trunk body 1 will be described below with reference to Figs.1, 3, 4 and 7.

A pair of left and right locking holes 26, 26 opening forwards are provided in a front end of a trunk-mounted portion 25 of the carrier C, and a pair of left and right stopper recesses 27, 27 opening upwards are provided at a rear end of the trunk-mounted portion 25. Correspondingly, a pair of engagement hooks 28, 28 bent rearwards are provided at a front end of a bottom surface of the trunk body 1, and a pair of left and right stopper projections 29, 29 are provided at a rear end of the bottom surface. Further, a plurality of cushion members 30 are attached to a bottom wall of the trunk body 1 to protrude from the bottom surface of the trunk body 1.

A pair of legs 31, 31 taller than the left and right stopper projections 29, 29 are projectingly provided on the bottom surface of the trunk body 1 to be adjacent and laterally outside the left and right stopper projections 29, 29. When the trunk T removed from the carrier C is put onto a flat portion 32 of a table or the like, the legs 31, 31 serve to stabilize the trunk T in contact with the flat portion 32 in cooperation with the left and right engagement hooks 28, 28, as shown in Fig.12.

In mounting the trunk T to the trunk-mounted portion 25 of the carrier C, the engagement hooks 28, 28 are brought into engagement from ahead into the locking holes 26, 26 in the trunk-mounted portion 25, and then the topper projections 2 9, 2 9 are brought into engagement in the stopper recesses 27, 27 of the trunk-mounted portion 25, while bringing the cushion members 30 into pressure contact with an upper surface of the trunk-mounted.portion 25. This arrangement prevents the disengagement of the engagement hooks 28, 28 from the locking holes 26, 26 as well as the longitudinal and lateral movement of the trunk body 1 on the trunk-mounted portion 25. In this state, a locking unit L is mounted to the trunk body 1 to maintain the states of the stopper projections 29, 29 engaged in the stopper recesses 27, 27.

The locking unit L also functions to maintain the closed state of the trunk lid 2. Next, the construction of the locking unit L will be described below with reference to Figs.15 to 22.

Referring first to Figs.15 to 18, a synthetic resin unit base 35 of the locking unit L is secured to a unit-mounted portion 36 formed at a rear corner of a bottom of the trunk body 1 and inclined upwards in a rearward direction, in the following manner:

As shown in Figs.15, 16 and 21, a plurality of nuts 37 are embedded in the unit base 35. As shown in Figs.15 to 18, a positioning hook 38 with its tip end bent forwards is formed at an upper end of the unit base 35, and a flat locking arm 41 having a locking hole 41a is formed at a lower end of the unit base 35 to extend forwards. The unit-mounted portion 36 is provided with a plurality of mounting holes 40 corresponding to the plurality of nuts 37, a positioning projecting wall 43 with which the positioning hook 38 is engaged, a flat through-hole 44 through which the locking arm 41 is passed, and a locking claw 42 engaged into the locking hole 41a in the locking arm 41.

In securing the unit base 35 to the unit-mounted portion 36, the locking arm 41 is first inserted through the through-hole 44 to engage the locking hole 41a with the locking claw 42. Then, the positioning hook 38 is brought into engagement with the positioning projecting wall 43, and thereafter, the bolts 39 passed through the mounting holes 40 from inside the trunk body 1 are threadedly engaged with the nuts 37 of the unit base 35 and tightened.

A guide hole 45 oblong in section is formed in the unit base 35 to extend vertically along the unit-mounted portion 36. A plate-shaped hook member 46 is slidably fitted into the guide hole 45. The hook member 46 has at its rear end a hook portion 46a bent rearwards. A locking portion 47 (also see Fig. 5) is formed on the trunk-mounted portion 25, so that the hook portion 46a is brought into and out of engagement with the locking portion 47 in accordance with the lifting and lowering of the hook member 46.

A first locking lever 50 is connected to the unit base 35 through a pivot 48 horizontally extending in a lateral direction of the trunk T. The first locking lever 50 includes an operating section comprising an arcuate portion 50a having a nonskid convex surface turned rearwards of the unit base 35, and an overhang portion 50b overhanging radially outwards from a lower end of the arcuate portion 50a. Therefore, the first locking lever 50 can be turned between a lower locking position A and an upper unlocking position B (see Fig. 18) by applying a turning force to the operating section 50a, 50b. The locking position A and the unlocking position B are defined by the abutment of the first locking lever 50 against a locking stopper 52 and an unlocking stopper 51 which are formed on the unit base 35.

Apair of left and right L-shaped toggle links 53 are connected at vertically opposite ends to the first locking lever 50 and the hook member 46 through first and second connecting shafts 54 and 55 parallel to the pivot 48. When the first locking lever 50 is turned to the upper unlocking position B, the hook member 46 is lowered to disengage its hook portion 46a from the locking portion 47 of the carrier C; and when the first locking lever 50 is turned to the lower locking position A, the hook member 46 is lifted to engage its hook portion 46a with the locking portion 47. The engagement of the hook portion 46a with the locking portion 47 fixes the state of engagement between the engagement hooks 28, 28 and the locking holes 26, 26 as well as the state of engagement between the stopper projections 29, 29 and the stopper recesses 27, 27. Therefore, in the state of the trunk T mounted on the trunk-mounted portion 25, if the first locking lever 50 is turned to the locking position A, the mounted state of the trunk T can be fixed, and if the first locking lever 50 is turned to the unlocking position B, the removal of the trunk T from the trunk-mounted portion 25 is possible.

When the hook portion 46a is brought into engagement with the locking portion 47 by turning the first locking lever 50 to the locking position A, the cushion members 30 (see Fig.7) on the trunk body 1 are compressed between the trunk body 1 and the trunk-mounted portion 25 of the carrier C by a downward reaction force acting on the hook member 46 from the locking portion 47, resulting in that a good engaged state free of looseness is ensured between the hook portion 46a and the locking portion 47.

As clearly shown in Fig.17, when the first locking lever reaches the locking position A, the L-shaped toggle link 53 moves over the pivot 48, and correspondingly the first connecting shaft 54 on the side of the first locking lever 50 extends beyond a change point from the side of the hook member 46 to the side of the first locking lever 50. Therefore, as long as the first locking lever 50 is retained in the locking position A, the lowering of the hook member 46 is prevented.

As shown in Figs. 17 and 18, the hook member 46 and the first locking lever 50 are formed with a recess 56 and a projecting wall 57, respectively, which are shifted from spaced-apart states into fitted states with a small clearance provided therebetween, when the first locking lever 50 is turned from the unlocking position B to the locking position A. Thus, when a misalignment is generated in the relative positional relationship between the hook member 46 and the first locking lever 50 due to a manufacture error of any component, or due to the deformation of the toggle link 53 by the entrance of a foreign matter between the hook portion 46a and the locking portion 47 and/or the like, even if the first locking lever 50 is turned from the unlocking position B toward the locking position A, the projecting wall 57 is put into abutment against a peripheral wall of the recess 56 in the process of such turning, thereby preventing the turning of the first locking lever 50 toward the locking position A. Thus, the user can notice the misalignment.

The locking structure for maintaining the closed state of the trunk lid 2 will be described below.

As shown in Figs.15 to 19, a pair of left and right links 60 integrally connected at their one-ends to each other are connected at their one-ends to the unit base 35 through a third connecting shaft 61. A second locking lever 59 is connected to the other ends of the links 60 through a fourth connecting shaft 62. The first and second connecting shafts 61 and 62 are disposed in parallel to the pivot 48. The second locking lever 59 is turnable about the third connecting shaft 61 together with the links 60 between a lower locking position D (see Figs.17 and 18) and an unlocking position E (see Fig.19).

An upper end of the second locking lever 59 extends above the unit base 35 and reaches the inside of the opening 8 inside the handle 7. An engagement hook 63 having a tip end bent downwards in a forward direction is formed at the upper end of the second locking lever 59. On the other hand, a hook 64 facing upwards in a rearward direction is formed at a rear end of the trunk lid 2 which faces the opening 8, so that when the second locking lever 59 is turned to the locking position D in the closed state of the trunk lid 2, the engagement hook 63 is brought into engagement with the locked hook 64; and when the second locking lever 59 is turned to the unlocking position E, the engagement hook 63 is disengaged upwards from the locked hook 64. Therefore, if the second locking lever 59 is turned to the locking position D in the closed state of the trunk lid 2, the closed state of the trunk lid 2 can be fixed, and if the second locking lever 59 is turned to the unlocking position E, the opening of the trunk lid 2 becomes possible.

Referring to Figs. 16, 17, 20 and 22, the second locking lever 59 is formed to cover the unit base 35 from behind in the locking position D, and is provided with a notch 65 for receiving the first locking lever 50. A cylinder lock 66 is attached to the second locking lever 59 sideways of the notch 65, and has a keyhole 67 facing the surface of the second locking lever 59. The cylinder lock 66 includes a locking piece 69 which is disposed on the rear side of the second locking lever 59 to be turned, by a key 68 inserted into the keyhole 67, between a locking position G (a position indicated by a solid line in Fig.22) and an unlocking position H (a position indicated by a dashed line in Fig.22). When the locking piece 69 is at the locking position G, it is in abutment against the back of the first locking lever 50 to prevent the turning of the first locking lever 50 from the locking position A to the unlocking position B, and to prevent the turning of the second locking lever 59 from the lockingposition D to the unlockingposition E; and when the locking piece 69 is at the unlocking position H, it moves away from the back of the first locking lever 50 to permit the turnings of the first and second locking levers 50 and 59 to their respective unlocking positions B and E. The key 68 inserted into the keyhole 67 in the cylinder lock 66 is incapable of being withdrawn at the unlocking position H of the locking piece 69, thereby enabling the user to know that the locking piece 69 is in the unlocking position H.

If a misalignment is generated in the relative positional relationship between the hook member 46 and the first locking lever 50 due to a manufacture error of any component, the deformation of the toggle link 53 by the entrance of a foreign matter between the hook portion 46a and the locking portion 47 and/or the like, when the first locking lever 50 is turned from the unlocking position B toward the locking position A, the projecting wall 57 of the first locking lever 50 is put into abutment against the peripheral wall of the recess 56 in the process of such turning to prevent the turning of the first locking lever 50 to the locking position A as described above. Therefore, even if an attempt is made to turn the locking piece 69 of the cylinder lock 66 from the unlocking position H toward the locking position G in such a state, the locking piece 69 cannot be turned, because the turning of the locking piece 69 toward the locking position G is prevented by its abutment against the sidewall of the first locking lever 50. Also by this situation, the user can know the misalignment.

Thus, by the single cylinder lock 66, it is possible to retain the first locking lever 50 for fixing the state of the trunk T mounted to the carrier C and the second locking lever 59 for locking the closed state of the trunk lid 2 in the respective locking positions A and D, leading to a great reduction in the number of parts. In this case, especially because the mating engagement portion with which the locking piece 69 is engaged in its locking position H is merely provided on the first locking lever 50 by mounting the cylinder lock 66 to the second locking lever 59, it is possible to further simplify the structure.

All the first and second locking lever 50 and 59 and the cylinder lock 66 are incorporated into the unit base 35 to constitute the single locking unit L. Therefore, the single unit base 35 and the single cylinder lock 66 suffice, which can contribute to the simplification of the structure and a reduction in the number of parts. Moreover, the single unit base 35 is merely secured to the trunk body 1 when mounting the locking unit L to the trunk body 1, leading to a reduced number of assembling steps, which contributes to a reduction in cost. The locking unit L is easily applicable to various kinds of the trunk T having different specifications, so that the locking unit L has a high general-purpose property.

The present invention is not limited to the above-described embodiment, and various modifications in design may be made without departing from the subject matter of the present invention.

## Claims

1. A trunk for a motorcycle, comprising a trunk body (1) detachably mounted to a carrier (C) of the motorcycle, and a trunk lid (2) connected to the trunk body through a hinge to open and close an upper open surface of the trunk body (1), the trunk body (1) and the trunk lid (2) being formed with a lower handle half (7a) and an upper handle half (7b) which are superposed on each other to constitute a carrying handle (7),
**characterized in that** a decorative cover (10) for covering and concealing an opening (8) inside the handle (7) from above is mounted to the trunk lid (2), and a partition wall (9) is integrally formed on the upper handle half (7b) to extend from the upper handle half (7b) along an inner surface of the decorative cover (10).

2. A trunk for a motorcycle according to claim 1, **characterized in that** the decorative cover (10) and the upper handle half (7b) are provided with a positioning piece (12) and a positioning bore (14), respectively, which are brought into engagement with each other upon mounting of the decorative cover (10) to the trunk lid (2).

3. A trunk device for a motorcycle in which a trunk (T) according to claim 1 or 2 is mounted to a carrier (C) for the motorcycle, **characterized in that** a locking unit (L) is constructed by mounting, to a common unit base (35) secured to the trunk body (1), a first locking means (46, 50, 53) for maintaining secured states of the trunk body (1) and the carrier (C) through the unit base (35), and a second locking means (59, 60) for maintaining closed states of the trunk body (1) and the trunk lid (2) through the unit base (35) ; and the locking unit (L) is provided with a common lock means (66) capable of locking the first locking means (46, 50, 53) and the second locking means (59, 60) in their locking states.

4. A trunk device for a motorcycle according to claim 3, **characterized in that** the first locking means (46, 50, 53) includes a first locking lever (50) which is operated between a locking position (A) for securing the unit base (35) and the carrier (C) to each other and an unlocking position (B) for canceling such securing; and the second locking means (59, 60) includes a second locking lever (59) which is operated between a locking position (D) for securing the unit base (35) and the trunk lid (2) to each other and an unlocking position (E) for canceling such securing; and one of the first and second locking levers (50 and 59) is provided with a lock means (66) for retaining the other locking lever in its locking position.

5. A trunk device for a motorcycle according to claim 4, **characterized in that** the first locking means comprises a hook member (46) supported on the unit base (35) and moved between lifted and lowered positions in which the hook member (46) is in and out of engagement with a locking portion (47) of the carrier (C), the first locking lever (50) supported in the unit base (35) and turned between the locking position (A) and the unlocking position (B), and a toggle link (53) which connects the first locking lever (50) and the hook member (46) to each other and which lifts and lowers the hook member (46) with the turning of the locking lever (50) to the locking position (A) and the unlocking position (B); the second locking means comprises a link (60) turnably supported at one end on the unit base (35), and a second locking lever (59) turnably connected to the other end of the link (60) and turned together with the link (60) between a lower locking position (D) in which the second locking lever (59) is in engagement with a locked hook (64) of the trunk lid (2) and an upper unlocking position (E) in which the second locking lever (59) is out of engagement with the locked hook (64); the locking lever (59) is formed to cover the unit base (35) in its locking position (D) and provided with a notch (65) for receiving the first locking lever (50); a cylinder lock (66) constituting the lock means is mounted to the second locking lever (59) sideways of the notch (65); and the cylinder lock (66) is provided with a locking piece (69) which is brought into engagement with the first locking lever (50) to prevent the turning of the first locking lever (50) toward the unlocking position (A) upon the locking operation of the cylinder lock (66).

## Patentansprüche

1. Koffer für ein Motorrad, einen Kofferkörper (1) umfassend, der entfernbar an einem Träger (C) des Motorrads befestigt ist, und einen Kofferdeckel (2), der mit dem Kofferkörper durch ein Gelenk verbunden ist, um eine obere Oberseite des Kofferkörpers (1) zu öffnen und zu schließen, wobei der Kofferkörper (1) und der Kofferdeckel (2) mit einer unteren Griffhälfte (7a) und einer oberen Griffhälfte (7b) ausgebildet sind, die aufeinander überlagert sind, um einen Tragegriff (7) zu bilden,
**dadurch gekennzeichnet, dass** eine dekorative Abdeckung (10) zum Abdecken und Verbergen einer Öffnung (8) im Griff (7) von oben an dem Kofferdeckel (2) befestigt ist und eine Trennwand (9) integral auf der oberen Griffhälfte (7b) ausgebildet ist, um sich von der oberen Griffhälfte (7b) entlang einer Innenseite der dekorativen Abdeckung (10) zu erstrecken.

2. Koffer für ein Motorrad gemäß Anspruch 1, **dadurch gekennzeichnet, dass** die dekorative Abdeckung (10) und die obere Griffhälfte (7b) jeweils mit einem Positionierstück (12) und einer Positionierbohrung (14) versehen sind, die beim Befestigen der dekorativen Abdeckung (10) an dem Kofferdeckel (2) miteinander in Eingriff gebracht werden.

3. Koffervorrichtung für ein Motorrad, in dem ein Koffer (T) gemäß Anspruch 1 oder 2 an einem Träger (C) für ein Motorrad befestigt ist, **dadurch gekennzeichnet, dass** die Sperreinheit (L) gestaltet ist, indem an einer am Kofferkörper (1) befestigten gemeinsamen Kofferbasis (35) ein erstes Sperrmittel (46, 50, 53) zum Beibehalten der gesicherten Zustände des Kofferkörpers (1) und des Trägers (C) durch eine Kofferbasis (35) und ein zweites Sperrmittel (59, 60) zum Beibehalten der geschlossenen Zustände des Kofferkörpers (1) und des Kofferdeckels (2) durch die Kofferbasis (35) angebracht ist; und wobei die Sperreinheit (L) mit einem allgemeinen Sperrmittel (66) ausgestattet ist, das die ersten Sperrmittel (46, 50, 53) und die zweiten Sperrmittel (59, 60) in den gesperrten Zuständen sperren kann.

4. Koffer-Vorrichtung für ein Motorrad gemäß Anspruch 3, **dadurch gekennzeichnet, dass** das erste Sperrmittel (46, 50, 53) einen ersten Sperrhebel (50) umfasst, der zwischen einer Sperrposition (A) zum Befestigen der Kofferbasis (35) und des Trägers (C) aneinander und einer Entsperrposition (B) zum Aufheben der Befestigung betätigbar ist; und das zweite Sperrmittel (59, 60) einen zweiten Sperrhebel (59) umfasst, der zwischen einer Sperrposition (D) zum Befestigen der Kofferbasis (35) und des Kofferdeckels (2) aneinander und einer Entsperrposition (E) zum Aufheben der Befestigung betätigt werden kann; und entweder der erste oder der zweite Sperrhebel (50 und 59) mit einem Sperrmittel (66) ausgestattet ist, um den anderen Sperrhebel in seiner Sperrposition zu halten.

5. Koffervorrichtung für ein Motorrad gemäß Anspruch 4, **dadurch gekennzeichnet, dass** das erste Sperrmittel einen Haken (46) umfasst, der an der Kofferbasis (35) gehalten wird und zwischen angehobenen und abgesenkten Positionen bewegt wird, in denen der Haken (46) sich im Eingriff und nicht im Eingriff in ein Sperrteil (47) des Trägers (C) befindet, wobei der erste Sperrhebel (50) in der Kofferbasis (35) gehalten wird und zwischen der Sperrposition (A) und der Entsperrposition (B) gedreht wird, und eine Umschaltverbindung (53), die den ersten Sperrhebel (50) und den Haken (46) miteinander verbindet und die den Haken (46) mit dem Drehen des Sperrhebels (50) in die Sperrposition (A) und die Entsperrposition (B) anhebt und absenkt; wobei das zweite Sperrmittel ein Verbindungsstück (60) umfasst, das drehbar an dem einen Ende auf der Kofferbasis (35) gehalten wird, und einen zweiten Sperrhebel (59), der drehbar an dem anderen Ende des Verbindungsstücks (60) gehalten wird, und zusammen mit dem Verbindungsstück (60) zwischen einer unteren Sperrposition (D), in der sich der zweite Sperrhebel (59) in Eingriff mit einem gesperrten Haken (64) des Kofferdeckels (2) befindet und einer oberen Entsperrposition (E), in der sich der zweite Sperrhebel (59) nicht in Eingriff mit dem gesperrten Haken (64) befindet; wobei der Sperrhebel (59) ausgebildet ist, um die Kofferbasis (35) in der Sperrposition (D) abzudecken und mit einer Nut (65) ausgebildet ist, um den ersten Sperrhebel (50) aufzunehmen; wobei ein Zylinderschloss (66), das den Sperrmechanismus bildet, an dem zweiten Sperrhebel (59) seitlich der Nut (65) befestigt ist; und das Zylinderschloss (66) mit einem Sperrstück (69) ausgestattet ist, das in Eingriff mit dem ersten Sperrhebel (50) gebracht wird, um das Drehen des ersten Sperrhebels (50) in Richtung der Entsperrposition (A) beim Sperrvorgang des Zylinderschlosses (66) zu verhindern.

## Revendications

1. Compartiment de rangement pour une motocyclette, comprenant un corps (1) de compartiment de rangement monté de façon détachable sur un porte-bagages (C) de la motocyclette, et un couvercle (2) de compartiment de rangement raccordé au corps de compartiment de rangement au moyen d'une charnière pour ouvrir et fermer une surface d'ouverture supérieure du corps (1) de compartiment de rangement, le corps (1) de compartiment de rangement et le couvercle (2) du compartiment de rangement étant formés avec une moitié inférieure de poignée (7a) et une moitié supérieure de poignée (7b) qui sont superposées l'une sur l'autre pour constituer une poignée porteuse (7), **caractérisé en ce qu'**un couvercle décoratif (10) destiné à couvrir et à masquer une ouverture (8) à l'intérieur de la poignée (7) depuis le dessus est monté sur le couvercle (2) du compartiment de rangement, et une paroi de séparation (9) est formée d'une seule pièce sur la moitié supérieure de poignée (7b) pour s'étendre depuis la moitié de poignée supérieure (7b) le long d'une surface interne du couvercle décoratif (10).

2. Compartiment de rangement selon la revendication 1, **caractérisé en ce que** le couvercle décoratif (10) et la moitié supérieure de poignée (7b) sont dotés d'une pièce de positionnement (12) et d'un alésage de positionnement (14), respectivement, qui sont amenés en engagement l'un avec l'autre lors du montage du couvercle décoratif (10) sur le couvercle (2) du compartiment de rangement.

3. Dispositif formant compartiment de rangement pour une motocyclette dans lequel un compartiment de rangement (T) selon la revendication 1 ou 2 est monté sur un porte-bagages (C) pour la motocyclette, **caractérisé en ce qu'**une unité de blocage (L) est construite par montage, sur une base de l'unité commune (35) fixée au corps (1) de compartiment de rangement, des premiers moyens de blocage (46, 50, 53) pour maintenir des états fixes du corps (1) de compartiment de rangement et du porte-bagages (C) au moyen de la base d'unité (35), et des deuxièmes moyens de blocage (59, 60) pour maintenir des états fixes du corps (1) de compartiment de rangement et le couvercle (2) du compartiment de rangement au moyen de la base de l'unité (35) ; et l'unité de blocage (L) est dotée d'un moyen de blocage commun (66) capable de bloquer les premiers moyens de blocage (46, 50, 53) et les deuxièmes moyens de blocage (59, 60) dans leurs états de blocage.

4. Dispositif formant compartiment de rangement pour une motocyclette selon la revendication 3, **caractérisé en ce que** les premiers moyens de blocage (46, 50, 53) comprennent un premier levier de blocage (50) qui est actionné entre une position de blocage (A) pour fixer la base de l'unité (35) et le porte-bagages (C) l'un à l'autre et une position de déblocage (B) pour annuler cette fixation ; et les deuxièmes moyens de blocage (59, 60) comprennent un deuxième levier de blocage (59) qui est actionné entre une position de blocage (D) pour fixer la base de l'unité (35) et le couvercle (2) du compartiment de rangement l'un à l'autre et une position de déblocage (E) pour annuler cette fixation ; et un des premier et deuxième leviers de blocage (50 et 59) est doté d'un moyen de blocage (66) pour retenir l'autre levier de blocage dans sa position de blocage.

5. Dispositif formant compartiment de rangement pour une motocyclette selon la revendication 4, **caractérisé en ce que** le premier moyen de blocage comprend un élément formant crochet (46) supporté sur la base de l'unité (35) et déplacé entre des positions soulevées et abaissées dans lesquelles l'élément formant crochet (46) est en engagement et hors d'engagement avec une portion de blocage (47) du porte-bagages (C), le premier levier de blocage (50) supporté dans la base de l'unité (35) et tourné entre la position de blocage (A) et la position de déblocage (B) et une genouillère (53) qui raccorde le premier levier de blocage (53) et l'élément formant crochet (46) l'un à l'autre et qui soulève et abaisse l'élément formant crochet (46) en tournant le levier de blocage (50) dans la position de blocage (A) et la position de déblocage (B) ; le deuxième moyen de blocage comprend un lien (60) supporté de façon à pouvoir tourner à une extrémité sur la base de l'unité (35), et un deuxième levier de blocage (59) raccordé de façon à pouvoir tourner à l'autre extrémité du lien (60) et tourné conjointement avec le lien (60) entre une position de blocage inférieure (D) dans laquelle le deuxième levier de blocage (59) est en engagement avec un crochet bloqué (64) du couvercle (2) du compartiment de rangement et une position de déblocage supérieure (E) dans laquelle le deuxième levier de blocage (59) est hors d'engagement avec le crochet bloqué (64) ; le levier de blocage (59) est formé pour couvrir la base de l'unité (35) dans sa position de blocage (D) et doté d'un cran d'arrêt (65) pour recevoir le premier levier de blocage (50) ; une serrure à barillet (66) constituant le moyen de blocage est monté sur le deuxième levier de blocage (59) latéralement au cran d'arrêt (65) ; et la serrure à barillet (66) est dotée d'une pièce de blocage (69) qui est amenée en engagement avec le premier levier de blocage (50) pour empêcher que le premier levier de blocage (50) tourne vers la position de déblocage (A) lors de l'opération de verrouillage de la serrure à barillet (66).
